# EUROPÄISCHE PATENTSCHRIFT

(11) **EP 1 515 384 B1**
(45) Veröffentlichungstag und Bekanntmachung des Hinweises auf die Patenterteilung: **09.04.2008**
(21) Anmeldenummer: 04405506.9
(22) Anmeldetag: 12.08.2004
(51) Int. Cl.: H01M 8/04, F28D 7/00, F28D 9/00

(54) **Anlage mit integrierten Brennstoffzellen und mit einem Wärmetauscher**
System with integrated fuel cells and heat exchanger
Système avec piles à combustible et échangeur de chaleur

(30) Priorität: 11.09.2003 EP 03405666
(43) Veröffentlichungstag der Anmeldung: 16.03.2005
(73) Patentinhaber: Sulzer Hexis AG, 8400 Winterthur (CH)
(72) Erfinder: Ettwein, Ralf, 8404 Winterthur (CH); Schuler, Alexander, 78464 Konstanz (DE)
(74) Vertreter: Sulzer Management AG

(56) Entgegenhaltungen:
- EP-A- 0 818 840
- EP-A- 1 193 462
- WO-A-02/080295
- PATENT ABSTRACTS OF JAPAN Bd. 2002, Nr. 08, 5. August 2002 (2002-08-05) & JP 2002 098424 A (ZEXEL VALEO CLIMATE CONTROL CORP), 5. April 2002 (2002-04-05)
- PATENT ABSTRACTS OF JAPAN Bd. 1998, Nr. 06, 30. April 1998 (1998-04-30) & JP 10 050327 A (FUJI ELECTRIC CO LTD), 20. Februar 1998 (1998-02-20)

## Beschreibung

Die Erfindung betrifft eine Anlage mit integrierten Brennstoffzellen zur Stromerzeugung mit einem Zusatzbrenner (B) und mit einem Wärmetauscher gemäss Oberbegriff von Anspruch 1.

Aus der EP-A- 0 818 840 ist eine Heizanlage mit integrierten Brennstoffzellen zur Erzeugung von elektrischer und thermischer Energie bekannt, wobei der Betreiber der Heizanlage, der "lokale Energienutzer", seinen Bedarf an den genannten Energieformen zumindest teilweise decken kann. Diese Heizanlage umfasst einen Zusatzbrenner. Es sind verschiedene Möglichkeiten beschrieben, wie aus der Primärenergie, die in Form eines gasförmigen Brennstoffes zur Verfügung gestellt wird, ein Maximum an thermischer Energie an ein Heizsystem, das eine Raumheizung und/oder Brauchwasser-Erwärmung umfasst, abgegeben werden kann. Aus wirtschaftlichen Gründen hat man verschiedene Massnahme vorgeschlagen und realisiert, um das bekannte Verfahren weiter zu vereinfachen, wobei man weiterhin eine optimale Nutzung der Primärenergie angestrebt hat. Bei dem aus der EP-A- 0 818 840 bekannten Verfahren wird reines Wasser zur Reformierung des Brennstoffs benötigt. Eine Massnahme zur Vereinfachung dieses Verfahrens hat darin bestanden, den Brennstoff, der auch in flüssiger Form vorliegen kann, mittels einer Reformierung unter partieller Oxidation aufzubereiten. Durch die partielle Oxidation erübrigt sich das kostspielige Erfordernis, reines Wasser als zusätzliches Edukt bei der Reformierung zur Verfügung zu stellen.

Weitere Massnahmen sind, a) zwischen der Anlage zur Erzeugung von elektrischer sowie thermischer Energie und dem lokalen Energienutzer einen Wärmespeicher anzuordnen und b) gegebenenfalls einen Überschuss an elektrischer Energie zu erzeugen, der an ein Netz der öffentlichen elektrischen Energieversorgung abgegeben wird. Bei der Erzeugung eines solchen Überschusses ergibt sich oft auch ein Überschuss an thermischer Energie, der den momentanen Bedarf des lokalen Energienutzers übersteigt. Diese thermische Energie kann im Wärmespeicher zwischengespeichert werden. Elektrische Energie wird nur so lange im Überschuss erzeugt, als der Wärmespeicher noch nicht vollständig geladen ist. Ein Überschuss an thermischer Energie kann auch entstehen, wenn der lokale Energienutzer gelegentlich relativ viel elektrische Energie benötigt. Auch in diesem Fall ist eine Speicherung der Überschusswärme vorteilhaft.

Der Wärmetransport von der Heizanlage mit integrierten Brennstoffzellen zum Wärmespeicher muss unter Verwendung geeigneter Wärmeübertragern erfolgen. Dabei ist ein Wärmetransport aus zwei Abgasströmen an den Wärmespeicher und/oder den lokalen Energienutzer durchzuführen, nämlich aus einem Abgasstrom der Brennstoffzellen und aus einem Abgasstrom des Zusatzbrenners. Durch die beiden Abgasströmen sind zwei unabhängige Variablen gegeben, deren Wertebereiche sich jeweils zwischen Null und einem Maximalwert erstrecken. Für den Wärmetransport ist mit Vorteil ein flüssiges Wärmeträgermedium, insbesondere Wasser oder ein Oel, vorgesehen, mit dem sich die Wärme zum lokalen Energienutzer transportieren lässt.

Aufgabe der Erfindung ist es, Mittel zu schaffen, mit denen eine Wärmeübertragung an das Wärmeträgermedium wirtschaftlich - insbesondere hinsichtlich der Variabilität der Abgasströme - durchführbar ist. Diese Aufgabe wird durch die im Anspruch 1 definierte Anlage gelöst. Dabei ergibt sich eine wirtschaftlich Wärmeübertragung für den erfindungsgemässen Wärmetauscher aufgrund einer besonderen und kompakten Gestaltung.

In der Anlage ist aus einem gasförmigen oder in die Gasform gebrachten Brennstoff mittels den Brennstoffzellen elektrische und thermische Energie und/oder mittels dem Zusatzbrenner thermische Energie erzeugbar. Ein Teil der in Form von heissen Abgasen vorliegenden thermischen Energie ist an ein flüssiges Wärmeträgermedium, insbesondere Wasser oder ein Oel, im Wärmetauscher übertragbar. Das Wärmeträgermedium ist zu einem Wärmetransport zwecks Raumheizung und/oder Brauchwasser-Erwärmung vorgesehen. Der Wärmetauscher bildet eine kompakte sowie aus einem gut wärmeleitenden Werkstoff hergestellte Einheit. Für das Abgas der Brennstoffzellen und das Abgas des Zusatzbrenners sind im Wärmetauscher zwei separate Kanäle innerhalb eines doppelwandigen Mantels angeordnet. Der Mantel weist einen strukturierten Innenraum auf, der ein kommunizierendes Gefäss bildet. Aufgrund der Strukturierung ist zumindest ein überwiegender Anteil des Innenraums von dem Wärmeträgermedium durchströmbar.

Die abhängigen Ansprüche 2 bis 10 betreffen vorteilhafte Ausführungsformen der erfindungsgemässen Anlage.

Nachfolgend wird die Erfindung anhand der Zeichnungen erläutert. Es zeigen:
- Fig. 1: eine schematische Darstellung einer Heizanlage, in der Brennstoffzellen zur Stromerzeugung integriert sind und die einen Zusatzbrenner umfasst,
- Fig. 2: einen Längsschnitt durch einen in der erfindungsgemässen Anlage verwendeten Wärmetauscher,
- Fig. 3: eine zweite Darstellung der in Fig. 1 gezeigten Anlage,
- Fig. 4: eine modifizierte Anlage in einer der Fig. 3 entsprechenden Darstellung und
- Fig. 5: eine weitere modifizierte Anlage.

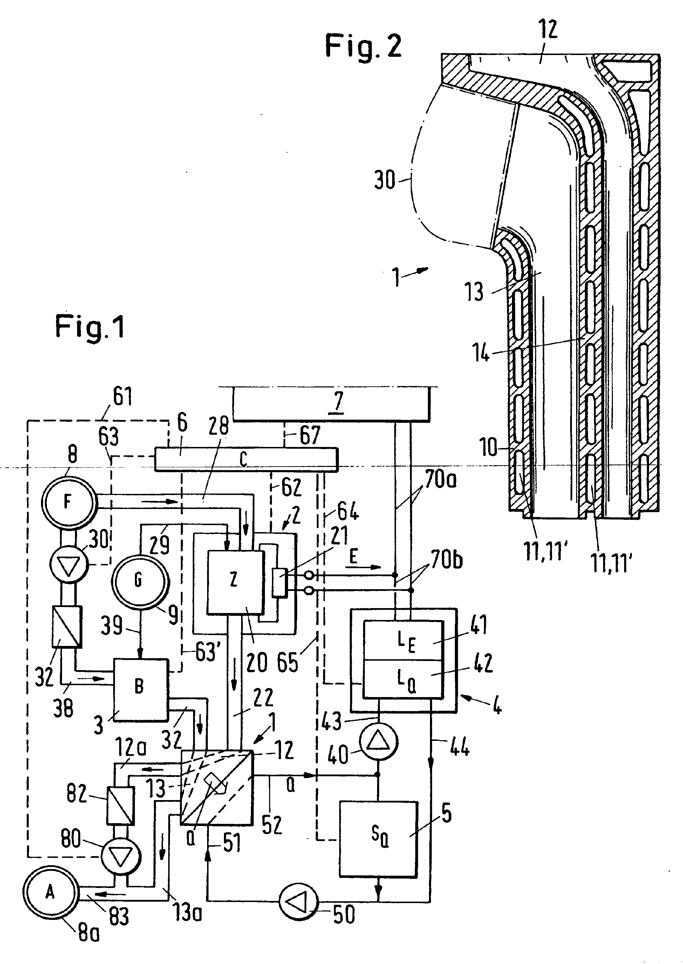

Die in Fig. 1 gezeigte Heizanlage umfasst einen Wärmetauscher 1, eine Teilanlage 2 mit Brennstoffzellen Z, die beispielsweise in einer stapelförmigen Einheit 20 angeordnet sind, und einen Zusatzbrenner 3, der in Fig. 1 auch mit B bezeichnet ist. Aus der Umgebung, der das Bezugszeichen 8 zugeordnet ist, wird Frischluft F durch eine Leitung 28 und gasförmiger oder vergaster Brennstoff G aus einer Quelle 9 durch eine Leitung 29 den Brennstoffzellen Z zugeführt. (Die Quelle 9 kann beispielsweise Erdgas sein, das durch ein öffentliches Leitungsnetz geliefert wird.) Ebenso wird Frischluft F durch eine Speiseleitung 38 und Brennstoff G durch eine Speiseleitung 39 dem Zusatzbrenner 3 zugegeleitet. Abgase, die in der Teilanlage 2 und im Zusatzbrenner 3 entstehen, werden über Leitungen 22 bzw. 32 dem Wärmetauscher 1 zugeführt. Aus dem Brennstoff G lässt sich mittels den Brennstoffzellen Z elektrische und thermische Energie und/oder mittels dem Zusatzbrenner 3 thermische Energie erzeugen. In der Teilanlage 2 findet eine Nachverbrennung mit Abluft und dem Brennstoff statt, der in den Brennstoffzellen Z nicht vollständig genutzt worden ist.

Ein von den Brennstoffzellen Z abgegebener elektrischer Gleichstrom wird in einem Umformer 21 in Wechselstrom gewandelt. Die so bereit gestellte elektrische Energie E wird zu einem lokalen Verbraucher 4 (Last L_{E}) oder an ein äusseres Netz 7 über die Leitungen 70a bzw. 70b transportiert. Ein Teil der in Form von heissen Abgasen vorliegenden thermischen Energie wird im Wärmetauscher 1 an ein flüssiges Wärmeträgermedium übertragen, insbesondere an Wasser oder an ein Oel. Das Wärmeträgermedium, mit dem ein Transport von Wärme Q zu Heizzwecken vorgesehen ist, wird mit Umwälzpumpen 40 und 50 durch die Leitungen 51, 52, 43 und 44 gefördert. Dabei wird diese Heizwärme Q (Leitung 52) einerseits vollständig oder zu einem Teil zum lokalen Verbraucher 4 (Last L_{Q}) transportiert; andererseits kann ein Überschuss der Heizwärme Q in einen Wärmespeicher 5, der auch mit S_{Q} bezeichnet ist, transportiert werden. Mit einem Sauggebläse 80 wird das Abgas aus der Teilanlage 2 (Kanal 12a) in einen Kanal 83 gefördert, wo es mit dem Abgas des Zusatzbrenners 3 (Kanal 13a) vereinigt als Gesamtabgas A an die Umgebung 8a abgegeben wird. Das Abgas des Zusatzbrenners 3 wird aufgrund eines Überdrucks gefördert, der mit einem Gebläse 30 erzeugt wird. Wird nur die Teilanlage 2 oder nur der Zusatzbrenner 3 betrieben, so verhindern Rückschlagklappen 32 bzw. 82 ein Rückströmen des Abgases.

Der Wärmetauscher 1 bildet eine kompakte Einheit, die aus einem gut wärmeleitenden Werkstoff hergestellt ist. Für das Abgas der Brennstoffzellen Z (oder genauer für das Abgas aus der Teilanlage 2) und das Abgas des Zusatzbrenners 3 sind im Wärmetauscher 1 zwei separate Kanäle 12 bzw. 13 innerhalb eines doppelwandigen Mantels 10 angeordnet. Der in Fig.1 symbolisch dargestellte Wärmetauscher 1 ist in Fig. 2 für ein konkretes Ausführungsbeispiel detaillierter und als Längsschnitt abgebildet. Der Mantel 10 weist einen Innenraum 11 auf, der durch eine Kammerung strukturiert ist und der ein kommunizierendes Gefäss bildet. Aufgrund der Strukturierung wird der Innenraum 11 (der ganze Innenraum 11 oder zumindest ein überwiegender Anteil von ihm) vom Wärmeträgermedium durchströmt, so dass diesem aus beiden Abgaskanälen 12 und 13 die Heizwärme Q zugeführt werden kann. Dank dem gut wärmeleitenden Werkstoff, aus dem der Mantel 10 besteht, kann das Wärmeträgermedium in allen Bereichen des Mantels 10 Wärme aufnehmen, auch wenn einer der beiden Abgasströme ausfällt. Der verwendete Werkstoff ist vorteilhafterweise eine Aluminiumlegierung, und der Mantel 10 ist zumindest teilweise durch ein Aluminiumguss-Verfahren hergestellt.

Die Anlage der Fig. 1 wird durch eine zentrale Steuereinheit 6 (auch mit C bezeichnet) gesteuert und geregelt. Es werden beispielsweise Steuersignale über Signalleitungen 61 und 62 an die Gebläse 30 bzw. 80 übermittelt. Die Teilanlage 2 ist über eine Signalleitung 62 und der Zusatzbrenner 3 über eine Signalleitung 63 mit der Steuereinheit 6 verbunden. Eine Verbindung 67 besteht zum "virtuellen Kraftwerk 7". Weitere Verbindungen zum lokalen Verbraucher 4 und zum Wärmespeicher 5 sind durch Signalleitungen 64 bzw. 65 hergestellt. Auch die Pumpen 40 und 50 sind über nicht dargestellte Leitungen an die zentrale Steuereinheit 6 angeschlossen. Beispielsweise wird der Transport der Wärme Q aus dem Speicher 5 mit Vorteil in Bezug auf eine vorgegebene Austrittstemperatur am Wärmetauscher 1 geregelt. Zu dieser Regelung wird auf die Förderleistung der Pumpe 50 eingewirkt.

Im Wärmetauscher 1 der Fig. 2 ist eine Trennwand 14 zwischen den beiden Abgaskanälen 12 und 13 doppelwandig ausgebildet. Die Trennwand 14 weist einen strukturierten Innenraum auf, derart, dass auch sie von dem Wärmeträgermedium durchströmt wird.

Im Ausführungsbeispiel der Fig. 2 ist der Innenraum 11 des Mantels 10 gekammert, d. h. er weist eine durch Mantelkammern 11' gebildete Gliederung auf. Insbesondere ist auch die Trennwand 14 zwischen den beiden Abgaskanälen 12 und 13 gekammert. (Durchtrittsöffnungen zwischen benachbarten Kammern 11' sind nicht dargestellt.) Die Kammern 11" der Trennwand 14 sind zwischen die Mantelkammern 11' so eingeordnet (in Form einer sequenziellen Einordnung), dass die Trennwand 14 ebenfalls von dem Wärmeträgermedium durchströmbar ist.

Der Wärmetauscher 1 ist aus einer kleinen Anzahl von monolithischen Teilen zusammengesetzt oder besteht vorzugsweise aus einem einzigen monolithischen Teil. Vorzugsweise ist jedes monolithische Teil ein Gussstück; oder zumindest sind einzelne der Teile Gussstücke.

Die beiden Abgaskanäle 12 und 13 erstrecken sich von einem Kopfende zu einem Fussende des Wärmetauschers. Die nicht dargestellte Eintrittstelle für das Wärmeträgermedium ist am Fussende und die entsprechende, ebenfalls nicht dargestellte Austrittstelle ist am Kopfende angeordnet.

Der Zusatzbrenner 3 (strichpunktiert angedeutete Kontur 30) lässt sich beim Wärmetauscher 1 der Fig. 2 direkt an der Eintrittstelle des für das Brennerabgas vorgesehenen Kanals 13 anordnen. Mit Vorteil ist der Wärmetauscher 1 an einen Abgas-Austrittstutzen der die Brennstoffzellen Z enthaltenden Einheit 20 anschliessbar.

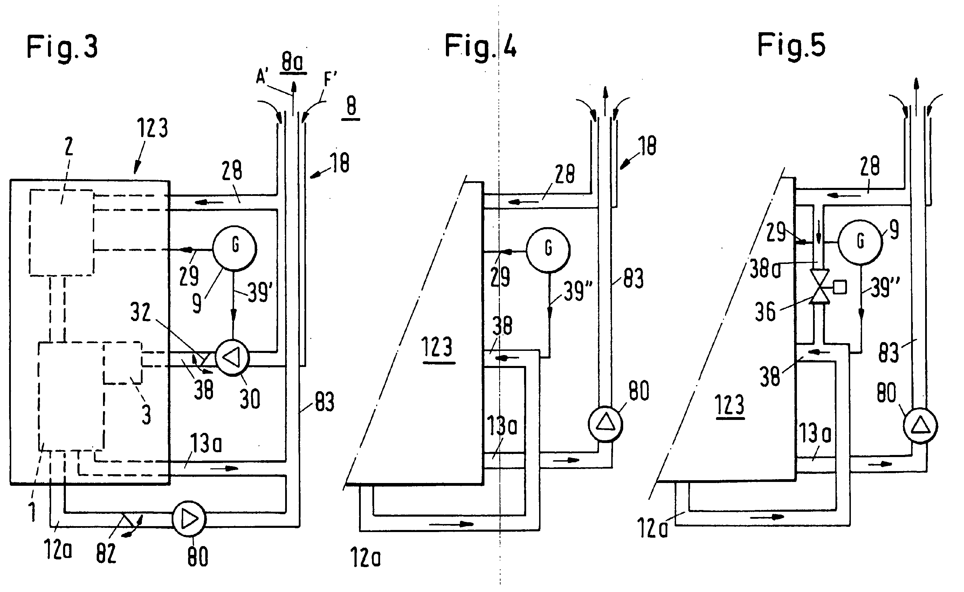

Fig. 3 zeigt in einer abgewandelten Darstellung geringfügig abgewandelt die Anlage der Fig. 1. Der Wärmetauscher 1, die Teilanlage 2 mit den Brennstoffzellen Z und der Zusatzbrenner 3 sind in einem Block 123 zusammengefasst. Die aus der Umgebung 8 angesaugte Frischluft F (vgl. Fig. 1) - als Pfeil F' dargestellt - wird in einem Gegenstromwärmetauscher 18 durch das im Wärmetauscher 1 teilweise abgekühlte Abgas A - Pfeil A' - vorgewärmt. Durch die Leitungen 28 und 32 wird die vorgewärmte Frischluft F in den Block 123 eingespeist. Der Gegenstromwärmetauscher 18 kann gleichzeitig als Kamin ausgebildet sein, durch den das Abgas A an die Umgebung 8a abgegeben wird.

Abweichend von der Anlage in Fig. 1 wird in Fig. 3 der Brennstoff G aus der Quelle 9 über eine Leitung 39' in das Gebläse 30 eingespeist, wo ein brennbares Gemisch entsteht. Dieses Gemisch strömt durch die Speiseleitung 38 in den Eintritt des Brenners 3. Ist das Gebläse 30 ausser Betrieb, so sorgt die Rückschlagklappe 32 dafür, dass Abgas, das durch das Gebläse 80 gefördert wird, nicht durch die Leitung 13a in den Wärmetauscher 1 eindringen kann. Umgekehrt verhindert die Rückschlagklappe 82 ein Abgaseintritt in den Wärmetauscher 1, wenn das Gebläse 80 ausser Betrieb ist.

Die Figuren 4 und 5 zeigen zwei abgewandelte Ausführungsformen der Heizanlage mit integrierten Brennstoffzellen. Bei beiden Modifikationen wird das Abgas der Brennstoffzellen Z, das einen Überschuss an Sauerstoff enthält, anstelle von Frischluft in den Zusatzbrenner 3 eingespeist. Das Gebläse 30 ist nicht mehr erforderlich. Es kann bei Bedarf über eine zusätzliche Leitung 38a - siehe Fig. 5 - Frischluft F in die Speiseleitung 38 des Brenners 3 zugeführt werden. Diese Zufuhr wird mittels einem Ventil 36 gesteuert. Der Brennstoff G wird jeweils mit Leitungen 39" in die Speiseleitung 38 eingemischt.

## Patentansprüche

1. Anlage mit integrierten Brennstoffzellen (Z) zur Stromerzeugung, mit einem Zusatzbrenner (B) und mit einem Wärmetauscher (1), in welcher Anlage aus einem gasförmigen oder in die Gasform gebrachten Brennstoff mittels den Brennstoffzellen elektrische und thermische Energie (E, Q) und/oder mittels dem Zusatzbrenner thermische Energie (Q) erzeugbar ist, ein Teil der in Form von heissen Abgasen vorliegenden thermischen Energie an ein flüssiges Wärmeträgermedium, insbesondere Wasser oder ein Oel, im Wärmetauscher übertragbar ist, und das Wärmeträgermedium zu einem Wärmetransport zwecks Raumheizung und/oder BrauchwasserErwärmung vorgesehen ist,
**dadurch gekennzeichnet, dass** der Wärmetauscher eine kompakte sowie aus einem gut wärmeleitenden Werkstoff hergestellte Einheit bildet, dass für das Abgas der Brennstoffzellen und das Abgas des Zusatzbrenners im Wärmetauscher zwei räumlich getrennte Kanäle (12, 13) innerhalb eines doppelwandigen Mantels (10) angeordnet sind, dass der Mantel einen strukturierten Innenraum (11) aufweist, der ein kommunizierendes Gefäss bildet, und dass zumindest ein überwiegender Anteil des lnnenraums aufgrund dessen Strukturierung von dem Wärmeträgermedium durchströmbar ist.

2. Anlage nach Anspruch 1, **dadurch gekennzeichnet, dass** im Wärmetauscher (1) eine Trennwand (14) zwischen den Abgaskanälen (12, 13) doppelwandig und einen strukturierten Innenraum aufweisend ausgebildet ist, derart, dass auch die Trennwand von dem Wärmeträgermedium durchströmbar ist.

3. Anlage nach Anspruch 1 und 2, **dadurch gekennzeichnet, dass** im Wärmetauscher (1) der Innenraum (11) des Mantels (10) gekammert ist, d. h. eine durch Mantelkammern (11') gebildete Gliederung aufweist, und dass insbesondere auch die Trennwand (14) zwischen den Abgaskanälen (12, 13) gekammert ist und Kammern (11') der Trennwand in die Gliederung des Mantels sequenziell eingeordnet sind, so dass die Trennwand aufgrund der sequenziellen Einordnung der Kammern von dem Wärmeträgermedium durchströmbar ist.

4. Anlage nach einem der Ansprüche 1 bis 3, **dadurch gekennzeichnet, dass** der Wärmetauscher (1) aus einer kleinen Anzahl von monolithischen Teilen, vorzugsweise aus einem einzigen monolithischen Teil besteht oder zusammengesetzt ist und dass jedes monolithische Teil oder zumindest einzelne der Teile Gussstücke sind.

5. Anlage nach einem der Ansprüche 1 bis 4, **dadurch gekennzeichnet, dass** die beiden Abgaskanäle im Wärmetauscher (1) sich von einem Kopfende zu einem Fussende des Wärmetauschers erstrecken und dass die Eintrittstelle für das Wärmeträgermedium am Fussende und die entsprechende Austrittstelle am Kopfende angeordnet sind.

6. Anlage nach einem der Ansprüche 1 bis 5, **dadurch gekennzeichnet, dass** der Zusatzbrenner (3) direkt an der Eintrittstelle des für das Brennerabgas vorgesehenen Kanals (13) des Wärmetauschers angeordnet ist, und dass der Wärmetauscher an einen Abgas-Austrittstutzen einer die Brennstoffzellen (Z) enthaltende Einheit (20) angeschlossen ist.

7. Anlage nach einem der Ansprüche 1 bis 6, **dadurch gekennzeichnet, dass** der für den Wärmetauscher verwendete Werkstoff eine Aluminiumlegierung ist und dass der Mantel zumindest teilweise durch Aluminiumguss hergestellt ist.

8. Anlage gemäss einem der Ansprüche 1 bis 7, **dadurch gekennzeichnet, dass** mit dem in einem Kreislauf (50, 51, 52) geführten Wärmeträgermedium thermische Energie (Q) in einen Wärmespeicher (5) transportierbar ist, dass dieser Wärmetransport in Bezug auf eine vorgegebene Austrittstemperatur am Wärmetauscher geregelt ist, und dass der Wärmespeicher zwecks Wärmetransport über einen weiteren Kreislauf (40, 43, 44) an ein Heizsystem für Raumheizung und/oder Brauchwassererwärmung (t_{Q}) angeschlossen ist.

9. Anlage nach Anspruch 8, **dadurch gekennzeichnet, dass** am Ausgang des Wärmetauschers (1) getrennte Leitungen (12a, 13a) an den beiden Abgaskanälen (12, 13) angeschlossen sind, dass in der Leitung (12a) für den Abgasstrom der Brennstoffzellen (Z) eine Rückschlagklappe (82) und ein Sauggebläse (80) angeordnet sind, dass mit einem Druckgebläse (30) und via eine Rückschlagklappe (32) Frischluft (F), insbesondere vorgewärmte Frischluft in den Zusatzbrenner (3) einspeisbar ist und dass vor oder mit Eintritt in einen Kamin (18) die Leitungen für die beiden Abgasströme (12a, 13a) in einer gemeinsamen Leitung (83) zusammengeführt sind.

10. Anlage nach Anspruch 8, **dadurch gekennzeichnet, dass** am Ausgang des Wärmetauschers (1) eine Leitung (12a) für den Strom des Brennstoffzellen-Abgases ohne Verzweigung zur Einspeiseleitung (38) des Zusatzbrenners (3) führt, dass eine Leitung (13a) für den Strom des Zusatzbrenner-Abgases via ein Sauggebläse (80) in einen Kamin (18) führt und dass eine zusätzliche Leitung (38a) für Frischluft (F) an die Einspeiseleitung (38) des Zusatzbrenners angeschlossen sein kann.

## Claims

1. A plant having integrated fuel cells (Z) for the production of electricity, an additional burner (B) and a heat exchanger (1), wherein electrical and thermal energy (E,Q) can be produced in said plant, from a gaseous fuel or from fuel brought into the gas form, by means of the fuel cells and/or thermal energy (Q) can be produced by means of the additional burner, wherein one part of the thermal energy present in the form of hot exhaust gases can be transferred to a liquid heat transfer medium, in particular water or an oil, in the heat exchanger and wherein the heat transfer medium is provided for heat transport for the purpose of room heating and/or process water heating,
**characterised in that** the heat exchanger forms a compact unit which is also made of material of good thermal conductivity, **in that** two spatially separate passages (12, 13) are arranged in the heat exchanger inside a double-walled jacket (10) for the exhaust gas of the fuel cells and the exhaust gas of the additional burner, **in that** the jacket has a structured inner space (11) which forms a communicating vessel and **in that** the heat transfer medium can flow through at least a predominant part of the inner space due to its structuring.

2. A plant in accordance with claim 1, **characterised in that**, in the heat exchanger (1), a partition wall (14) between the exhaust passages (12, 13) is made double-walled and has a structured inner space, in such a way that the heat transfer medium can also flow through the partition wall.

3. A plant in accordance with claim 1 and claim 2, **characterised in that**, in the heat exchanger (1), the inner space (11) of the jacket (10) is chambered, i.e. has a structure formed by jacket chambers (11') and **in that**, in particular, the partition wall (14) between the exhaust passages (12, 13) is also chambered and chambers (11') of the partition wall are sequentially arranged in the structure of the jacket, so that the heat transfer medium can flow through the partition wall, due to the sequential arrangement of the chambers.

4. A plant in accordance with any one of the claims 1 to 3, **characterised in that** the heat exchanger (1) consists of or is assembled from a small number of monolithic parts, preferably consists of one single monolithic part and **in that** each monolithic part or at least some of the parts are castings.

5. A plant in accordance with any one of the claims 1 to 4 **characterised in that** the two exhaust passages in the heat exchanger (1) extend from a head end to a foot end of the heat exchanger and **in that** the inlet point for the heat transfer medium is arranged at the foot end and the corresponding outlet point at the head end.

6. A plant in accordance with any one of the claims 1 to 5, **characterised in that** the additional burner (3) can be arranged directly at the inlet point of the passage (13) of the heat exchanger provided for the burner exhaust gas and **in that** the heat exchanger can be attached to an exhaust gas outlet stub of a unit (20) containing the fuel cells (Z).

7. A plant in accordance with any one of the claims 1 to 6, **characterised in that** the material used for the heat exchanger is an aluminium alloy and **in that** the jacket is manufactured of cast aluminium, at least in part.

8. A plant with a heat exchanger in accordance with any one of the claims 1 to 7, **characterised in that** thermal energy (Q) transported with the heat transfer medium in a circuit (50, 51, 52) can be transported into a heat store (5), **in that** this heat transport is regulated with relation to a pre-determined outlet temperature at the heat exchanger and **in that** the heat store is connected for the purpose of heat transport via a further circuit (40, 43, 44) to a heating system for room heating and/or process water heating (L_{q}).

9. A plant in accordance with claim 8, **characterised in that** separate ducts (12a, 13a) are connected to the two exhaust gas passages (12, 13) at the outlet of the heat exchanger (1), **in that** a non-return flap (82) and a suction fan (80) are arranged in the duct (12a) for the exhaust stream of the fuel cells (Z), **in that** fresh air (F), in particular pre-heated fresh air, can be fed by a pressure fan (30) and via a non-return flap (32) into the additional burner (3) and **in that** prior to or on entering a chimney (18) the ducts for the two exhaust streams (12a, 13a) are combined into a common duct (83).

10. A plant in accordance with claim 8, **characterised in that**, at the outlet of the heat exchanger 1, a duct (12a) for the flow of the fuel cell exhaust gas leads, without branching, to the inlet duct (38) of the additional burner (3), **in that** a duct (13a) for the flow of the additional burner exhaust leads via a suction fan (80) into a chimney (18) and **in that** an additional duct (38a) for fresh air (F) can be attached to the infeed duct (38) of the additional burner.

## Revendications

1. Installation comprenant des cellules de combustible (Z) intégrées pour la production de courant, un brûleur supplémentaire (B) et un échangeur de chaleur (1), installation dans laquelle, à partir d'un combustible gazeux ou amené dans la forme gazeuse, de l'énergie électrique et de l'énergie thermique (E, Q) peut être générée au moyen des éléments de combustible et/ou de l'énergie thermique (Q) peut être générée au moyen du brûleur supplémentaire, une partie de l'énergie thermique présente sous la forme de gaz brûlés chauds peut être transmise à un agent caloporteur liquide, en particulier de l'eau ou une huile, dans l'échangeur de chaleur, et l'agent caloporteur est prévu pour un transport de chaleur pour le chauffage de local et/ou pour le réchauffement d'eau non potable,
**caractérisée en ce que** l'échangeur de chaleur forme une unité compacte et fabriquée dans un matériau bon thermoconducteur, **en ce que**, pour les gaz brûlés des cellules de combustible et les gaz brûlés du brûleur supplémentaire, deux canaux (12, 13) séparés dans l'espace sont disposés dans l'échangeur de chaleur à l'intérieur d'une enveloppe (10) à double paroi, **en ce que** l'enveloppe présente un espace intérieur (11) structuré qui forme un récipient communicant et **en ce qu'**au moins une partie prépondérante de l'espace intérieur peut être traversée par l'agent caloporteur du fait de sa structuration.

2. Installation selon la revendication 1, **caractérisée en ce que** dans l'échangeur de chaleur (1) est réalisée une paroi de séparation (14) entre les canaux de gaz brûlés (12, 13) avec deux parois et présentant un espace intérieur structuré de telle sorte que également la paroi de séparation peut être traversée par l'agent caloporteur.

3. Installation selon les revendications 1 et 2, **caractérisée en ce que** l'espace intérieur (11) de l'enveloppe (10) est compartimenté dans l'échangeur de chaleur (1), c'est-à-dire présente une structuration formée par des chambres d'enveloppe (11'), et **en ce que** en particulier également la paroi de séparation (14) entre les canaux de gaz brûlés (12, 13) est compartimentée et des chambres (11') de la paroi de séparation sont intégrées de façon séquentielle dans la structuration de l'enveloppe, de sorte que la paroi de séparation peut être traversée par l'agent caloporteur compte tenu de la division séquentielle des chambres.

4. Installation selon l'une quelconque des revendications 1 à 3, **caractérisée en ce que** l'échangeur de chaleur (1) est constitué ou assemblé à partir d'un petit nombre de parties monolithes, de préférence d'une seule partie monolithe et **en ce que** chaque partie monolithe ou tout du moins certaines des parties sont des pièces coulées.

5. Installation selon l'une quelconque des revendications 1 à 4, **caractérisée en ce que** les deux canaux de gaz brûlés dans l'échangeur de chaleur (1) s'étendent depuis une extrémité de sommet jusqu'à une extrémité de base de l'échangeur de chaleur et **en ce que** le point d'entrée pour l'agent caloporteur et le point de sortie correspondant sont disposés respectivement sur l'extrémité de base et l'extrémité de sommet.

6. Installation selon l'une quelconque des revendications 1 à 5, **caractérisée en ce que** le brûleur supplémentaire (3) est disposé directement au point d'entrée du canal (13) prévu pour les gaz brûlés de brûleur de l'échangeur de chaleur et **en ce que** l'échangeur de chaleur est raccordé à une tubulure de sortie de gaz brûlés d'une unité (20) contenant les cellules de combustible (Z).

7. Installation selon l'une quelconque des revendications 1 à 6, **caractérisée en ce que** le matériau utilisé pour l'échangeur de chaleur est un alliage d'aluminium et **en ce que** l'enveloppe est fabriquée au moins en partie par de la fonte d'aluminium.

8. Installation selon l'une quelconque des revendications 1 à 7, **caractérisée en ce que** de l'énergie thermique (Q) peut être transportée dans un accumulateur de chaleur (5) avec l'agent caloporteur guidé dans un circuit (50, 51, 52), **en ce que** ce transport de chaleur est régulé par rapport à une température de sortie prédéfinie sur l'échangeur de chaleur et **en ce que** l'accumulateur de chaleur est raccordé pour le transport de chaleur par un autre circuit (40, 43, 44) à un système de chauffage pour le chauffage de local et/ou le réchauffement d'eau non potable (L_{Q}).

9. Installation selon la revendication 8, **caractérisée en ce que**, à la sortie de l'échangeur de chaleur (1), des conduites (12a, 13a) séparées sont raccordées aux deux canaux de gaz brûlés (12, 13), **en ce que** un clapet antiretour (82) et une soufflerie d'aspiration (80) sont disposés dans la conduite (12a) pour le flux de gaz brûlés des cellules de combustible (Z), **en ce que**, avec une soufflerie de pression (30) et via un clapet antiretour (32), de l'air frais (F), en particulier de l'air frais préchauffé peut être injecté dans le brûleur supplémentaire (3) et **en ce que**, avant ou avec l'entrée dans une cheminée (18), les conduites pour les deux flux de gaz brûlés (12a, 13a) sont guidées ensemble dans une conduite (83) commune.

10. Installation selon la revendication 8, **caractérisée en ce que**, à la sortie de l'échangeur de chaleur (1), une conduite (12a) pour le flux des gaz brûlés de cellules de combustible aboutit sans dérivation à la conduite d'injection (38) du brûleur supplémentaire (3), **en ce qu'**une conduite (13a) pour le flux des gaz brûlés du brûleur supplémentaire aboutit via une soufflerie d'aspiration (80) dans une cheminée (18)
et **en ce qu'**une conduite (38a) supplémentaire pour de l'air frais (F) peut être raccordée à la conduite d'injection (38) du brûleur supplémentaire.
